Europäisches Patentamt

European Patent Office

Office européen des brevets

(11) Publication number: **0 143 740**
A 1

## EUROPEAN PATENT APPLICATION

(21) Application number: **84810042.6**

(51) Int. Cl.⁴: **B 23 Q 5/36**, F 15 B 9/12

(22) Date of filing: **24.01.84**

(30) Priority: **28.10.83 CH 5863/83**

(71) Applicant: **Albe S.A., Via Ginnasio, CH-6982 Agno (CH)**

(43) Date of publication of application: **05.06.85**
**Bulletin 85/23**

(72) Inventor: **Milocchi, Claudio, Via Creva 24, I-21016 Luino (IT)**

(84) Designated Contracting States: **AT BE DE FR GB IT LU NL SE**

(74) Representative: **Bagglolini, Raimondo et al, Racheli & Fiammenghi Via San Gottardo 15, CH-6900 Lugano (CH)**

(54) process and device for small-sized control of the work stations of an automatic machine tool.

(57) The process makes possible the programming of each work unit of an automatic machine tool by the operator assigned to the machine on the basis of immediate working requirements which can be duly evaluated by him, responding, in his own language, to a series of requests that appear on a screen.

On the basis of the replies given to him, a second electronic memory is programmed by a keyboard which makes the work stations operate in the requested mode.

The device for driving the work unit comprises: a stepper motor (1) that drives a nut (2) controlling, by a tube (4), valves (7 and 8) for intake and discharge of a fluid in the hydraulic cylinder (10) for driving the work unit, said piston (11) is solid with a screw (9) screwing in said nut (2) and prevents it from rotating, thus achieving a mechanical retroaction that makes the control independent of the variation of the viscosity of the fluid by the effect of the temperature.

<u>Process and device for small-sized control of the work sta-</u>
<u>tions of an automatic machine tool</u>

This invention has as its object a process and device for
small-sized control of the work stations of an automatic
machine tool, avoiding the need to change cams or gears to
vary the working speed and the movements of the various
tools by programming electronic memories.

The process is characterized by the characterizing part of
claim 1.

The device for embodying the process is characterized by
the characterizing part of claim 2.

For greater clarity the accompanying drawing represents a
preferred nonlimiting embodiment of the device, object of
the invention.

- Fig. 1 represents the complete device.

- Fig. 2 represents it diagrammatically for a better understanding.

- Fig. 3 and 4 represent details.

It comprises: stepper motor 1 that controls, by gears 5 and
6, nut 2 in which is screwed screw 9 rigidly connected to
piston 11 that can slide in hydraulic cylinder 10. Piston 11
in turn is connected to a work station of the automatic machine tool.

Given the connection existing between piston 11 and screw
9, the latter cannot rotate but can move only laterally when
the piston moves.

Said screw 9 and the relative nut exhibit a thread, prefe-

- 2 -                                          0143740

rably of trapezoidal cross section, given the great precision
required, but can be of any type, for example; having ball
movement, i.e., with the threads of the screw made of a succession of balls to reduce friction.

Nut 2 in turn is rigidly connected to a tube 4 provided with
a checking appendix 4' and two flanges 4" and 4"', the first
of which, 4", controls valve 7 for intake of the fluid in
cylinder 10, the second, 4"', controls valve 8 for discharge of said fluid.

The entire unit is so arranged that opening of said intake
valve 7, due to the rotation of stepper motor 1 in one direction, governs the intake of the fluid in cylinder 10
(with passage in direction PA) and the consequent movement
of piston 11 for controlling the work  unit and therefore
the movement of screw 9 in the opposite direction with respect to that of the movement of tube 4. Movement of tube 4
and therefore of valve 7 occurs as a function of the resultant between the movement of nut 2 due to the rotation of
stepper motor 1 and that of piston 11. Therefore, it is possible in this way automatically to regulate the position
of valves 7 and 8 as an exact function of the programmed
working speed.

Doubly inclined appendix 4', with the cooperation of tappet
13 and electric contacts 3, makes possible the synchronization explained above.

The mechanical synchronization of the programmed movement
speed of valves 7 and 8 further makes the device independent
of the viscosity of the fluid, generally oil, which goes
through valves 7 and 8, a viscosity that can vary with the
variation of the temperature.

The stepper motor is provided with a handwheel 15, which
can be operated by hand to allow manual adjustment of the

- 3 -  0143740

position of each work station.

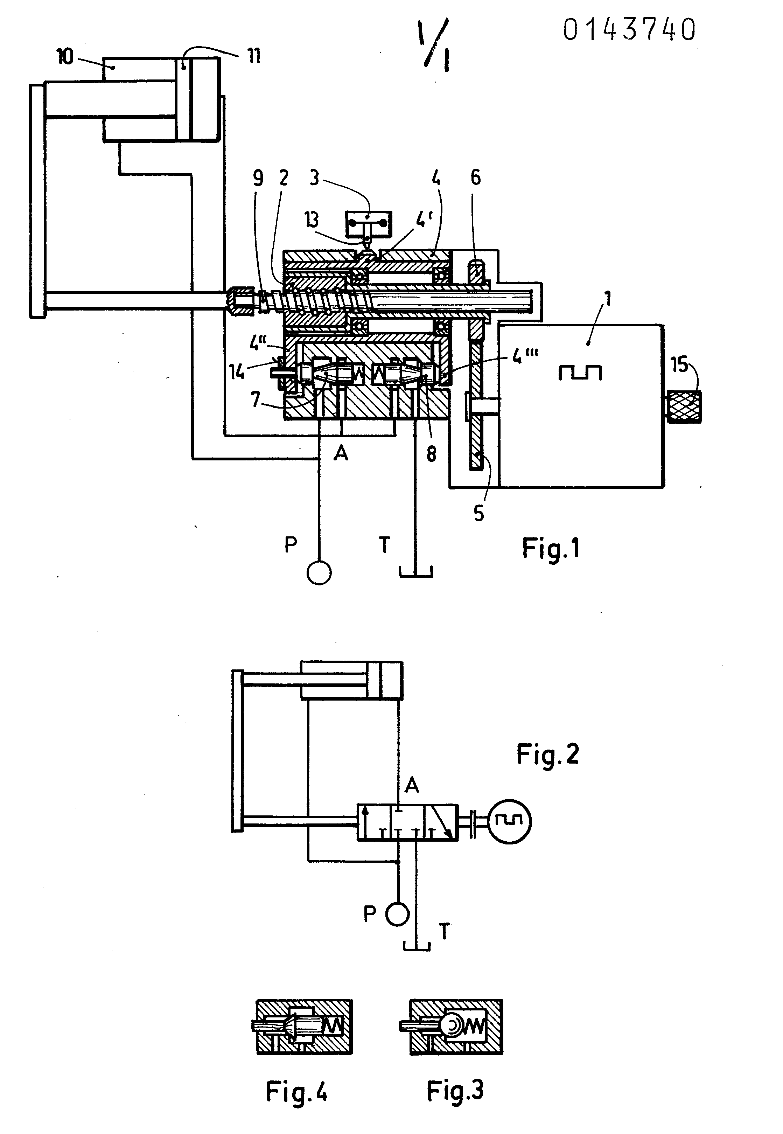

Valves 7 and 8 can, for example, by cylindrical (fig. 1), conical (fig. 4), spherical (fig. 3) or any other known shape.

But the cylindrical type valves, shown in fig. 1, are preferable because they allow circulation of the fluid in both directions, show less wear in comparison with the conical type if working along a generatrix and further offer the possibility of an easy boring of their seat which is also cylindrical.

It is provided that cylinder 10 can also be single-action, although in any case, it is preferable that it functions with double action as explained.

- 1 - 0143740

Claims

1. Process for small-sized control of the work stations of an automatic machine tool, avoiding the need to change cams or gears to vary the working speed and movements of the various tools by programming electronic memories, characterized by the use, for each work station, of a stepper motor (1) or the equivalent, which by mechanical elements (5, 6) and a screw (9) and nut (2) unit, controls the hydraulic valves (7, 8) that regulate the intake and discharge of the fluid in a cylinder (10) causing the relative piston (11), driving the working unit of the automatic machine to move at different speeds and in two directions; the movement of the piston (11) acting rectroactively on the screw (9) and nut (2) unit to synchronize mechanically its programmed movement speed, with the value of the opening and closing of the hydraulic valves (7, 8) independently of the variations in temperature and therefore of the viscosity of the fluid going through said hydraulic valves (7, 8); a checking device (3, 4') making it possible to check the correctness of said synchronization; manual adjustment of movement of each work station further being provided preferably by acting on elements (15) that are part of said stepper motor (1).

2. Device for embodying the process as in claim 1, wherein the stepper motor (1), by gears (5, 6) controls the nut (2) of a screw (9) rigidly connected to the piston (11) of the hydraulic cylinder (10), so as not to be able to rotate but to move only axially with the piston; said nut (2) in turn being rigidly connected to a tube (4) provided with two flanges (4", 4"'), the first driving the valve (7) in one direction for intake of the fluid in the cylinder (10), the second driving the valve (8) in the opposite direction for discharge of said fluid; the entire unit is so arranged that the opening of the intake valve (7), due to the rotation of the stepper motor (1) in one direction, causes the intake of the fluid in the cylinder (10) and the consequent movement of the control piston of the work unit in the opposite direction with respect to that of the movement of said tube (4) whereby the resulting movement of the tube (4) and therefore of the valves (7, 8) occurs as a function of the resultant between the movement due to the rotation of the stepper motor (1) and that of the piston (11), and automatically regulates the position of the intake valve (7) to the programmed working speed; said stepper motor being provided with a handwheel (15) for manually varying the position of the piston (11) driving the work unit.

3. Device as in claim 2, wherein the device for checking the synchronization comprises a cam (4') solid with said tube (4) with respective tappet (13) operating electric contacts (3).

4. Device as in claims 2 and 3, wherein the thread of the screw and the complementary grooving of the nut have a trapezoidal section.

5. Device as in claims 2 and 3, wherein the screw and nut are of the ball travel type.

6. Device as in claim 2, wherein the intake valve (7) and discharge valve (8) are cylindrical to allow circulation of the fluid in both directions.

7. Device as in claim 2, wherein the intake valve (7) and discharge valve are conical.

8. Device as in claim 2, wherein the intake valve (7) and discharge valve are spherical.

9. Device as in claim 2, wherein said hydraulic cylinder (10) is of the single-action type.

10. Device as in claim 2, wherein said hydraulic cylinder (10) is of the double-action type.

11. Device as in claim 10, wherein the hydraulic circuit, when it drives the double-action cylinder (10) is closed, i.e., the fulid does not go into the tank but returns to the circuit itself to allow:
- a greater precision and stability during the movements since the smaller section of the piston (11) is always under pressure;
- a lower consumption of oil and therefore a lower oil temperature.

0143740

1/1

Fig.1

Fig.2

Fig.4    Fig.3

EP 84 81 0042

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-2 318 707 (A. HERBERT LTD) <br><br> * Claim 1; figure 1 * <br><br> --- | 1,2,6, 10 | B 23 Q 5/36 <br> F 15 B 9/12 |
| X | DE-A-2 062 134 (HARTMANN & LÄMMLE oHG) <br><br> --- | 1,2,7, 10 | |
| X | DE-A-2 156 695 (HARTMANN & LÄMMLE oHG) <br><br> * Claim 1 * <br><br> --- | 3 | |
| X | FR-A-1 165 754 (ÉTABLISSEMENTS A. CAZENEUVE ET H-R.BRUET) <br><br> * Figure 1 * <br><br> --- | 4 | **TECHNICAL FIELDS SEARCHED (Int. Cl.4)** |
| X | US-A-3 075 503 (W. KIMSEY) <br><br> * Column 2, line 67 * <br><br> --- | 5 | B 23 Q 5/00 <br> F 15 B 9/00 |
| X | US-A-2 309 637 (E. FICKETT et al.) <br><br> * Figure 1 * <br><br> --- | 11 | |

-/-

The present search report has been drawn up for all claims

| Place of search | Date of completion of the search | Examiner |
|---|---|---|
| THE HAGUE | 18-02-1985 | DE GUSSEM J. |

**0143740**

. Application number

European Patent
Office

**EUROPEAN SEARCH REPORT**

EP 84 81 0042

| **DOCUMENTS CONSIDERED TO BE RELEVANT** | | | Page 2 |
|---|---|---|---|
| Category | Citation of document with indication, where appropriate, of relevant passages | Relevant to claim | CLASSIFICATION OF THE APPLICATION (Int. Cl.4) |
| A | US-A-2 910 967 (R. ROSEBROOK) | | |
| | --- | | |
| A | GB-A-1 327 062 (TOKYO SHIBAURA ELECTRIC CO. LTD) | | |
| | ----- | | |
| | | | **TECHNICAL FIELDS SEARCHED (Int. Cl.4)** |

The present search report has been drawn up for all claims

| Place of search | Date of completion of the search | Examiner |
|---|---|---|
| THE HAGUE | 18-02-1985 | DE GUSSEM J. |